# EUROPÄISCHE PATENTSCHRIFT

(11) **EP 3 028 612 B1**
(45) Veröffentlichungstag und Bekanntmachung des Hinweises auf die Patenterteilung: **07.08.2019**
(21) Anmeldenummer: 15194194.5
(22) Anmeldetag: 12.11.2015
(51) Int. Cl.: A47J 31/60, B01D 27/08, B01D 27/10

(54) **FILTER ZUM EINSETZEN IN EINEN WASSERVORRATSTANK EINES HAUSHALTSGERÄTES, INSBESONDERE EINER GETRÄNKEMASCHINE**
FILTER FOR INSERTION INTO A WATER STORAGE TANK OF A HOUSEHOLD APPLIANCE, IN PARTICULAR A BEVERAGE MACHINE
FILTRE À MONTER DANS UN RÉSERVOIR D'EAU D'UN APPAREIL MÉNAGER, EN PARTICULIER UNE MACHINE À BOISSON

(30) Priorität: 02.12.2014 DE 102014117725
(43) Veröffentlichungstag der Anmeldung: 08.06.2016
(73) Patentinhaber: Aquis Wasser-Luft-Systeme GmbH, Lindau, Zweigniederlassung Rebstein, 9445 Rebstein (CH)
(72) Erfinder: Wallerstorfer, Kurt, 5204 Strasswalchen (AT)
(74) Vertreter: Otten, Roth, Dobler & Partner mbB Patentanwälte

(56) Entgegenhaltungen:
- DE-A1-102006 029 105
- DE-A1-102006 037 364
- US-A1- 2006 060 512

## Beschreibung

Die Erfindung betrifft einen Filter zum Einsetzen in einen Wasservorratstank nach dem Oberbegriff des Anspruchs 1.

In Haushaltsgeräten mit Wassertank, beispielsweise Getränkemaschinen wie Espressomaschinen oder dergleichen, werden vermehrt Wasserfilterpatronen eingesetzt, um das Wasser vor der eigentlichen Verwendung aufzubereiten. Derartige Filterpatronen sind zum Einsetzen in den Wassertank ausgebildet und zu diesem Zweck mit einem Anschlusselement zum Anschluss einer Filterablaufleitung an ein tankseitiges Anschlusselement versehen. Das Filtergehäuse wird mit permanent offenen Eintrittsöffnungen für den Eintritt von Wasser aus der Umgebung, das heißt aus dem Wassertank versehen, sodass der Wassertank über die Filterpatrone entleerbar ist. Das Wasser wird dabei über eine Saugpumpe des Haushaltsgeräts über die Filterpatrone abgesaugt.

Zur Vermeidung des Einsatzes eines ungeeigneten Filtertyps oder auch zur Erkennung einer erschöpften Filterpatrone wurde bei einer solchen Filterpatrone zusätzlich der Einsatz eines elektronischen Kommunikationselementes bekannt. Eine solche Filterpatrone wird in der Druckschrift DE 10 2006 029 105 A1 beschrieben.

Bei diesem Stand der Technik wird bereits erkannt, dass bei der Transmission elektromagnetischer Wellen durch Wasser eine Frequenzverstimmung eintreten kann. Deshalb wird beim Stand der Technik für diesen Fall bei der Fertigung bzw. der Einstellung der Sende- und/oder Empfangsfrequenzen eine gezielte Verstimmung zwischen dem filterpatronenseitigen Kommunikationselement und dem externen Kommunikationselement, das auf Seiten des Haushaltsgerätes angeordnet ist, vorgesehen, um eine solche Frequenzverstimmung zu kompensieren.

Weiterhin offenbart die DE 10 2006 037 364 A1 eine Sensorvorrichtung mit einer Basiseinheit, die ein Schwingkreisortungssystem mit wenigstens einem ortsselektiven Sende- und Empfangselement mit einer Ortskennung durch elektromagnetische Wellen umfasst, und mit einem Sensorelement, das einen Ortungsschwingkreis zur Markierung des zu erfassenden Ortes umfasst, wobei das Sensorelement eine Kodiereinheit zur Übertragung kodierter Informationen umfasst.

Weiterhin offenbart die US 2006/0060512 A1 ein System zur Überwachung der Funktionalität einer Fluidaufbereitungskartusche umfassend einen radio frequency identification tag (RFID) zur Datenübertragung und - speicherung.

Aufgabe der Erfindung ist es, einen Wasserfilter zum Einsetzen in einen Wasservorratstank einer Getränkemaschine mit einem elektronischen Kommunikationselement vorzuschlagen, bei der Störeffekte durch eine Frequenzverstimmung vermindert oder vermieden werden.

Diese Aufgabe wird ausgehend von einem Filter nach dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend wird erfindungsgemäß im Filtergehäuse ein elektronisches Kommunikationselement mit Antenne und Mikrochip angeordnet, wobei ein Luftraum vorgesehen ist, in den die Antenne derart eingesetzt ist, dass sie wenigstens teilweise mit Luftkontakt in dem Luftraum liegt.

Das Kommunikationselement und insbesondere die Antenne kann dabei in einer in das Filtergehäuse eingeformten Luftkammer angeordnet werden. Zu einer besonderen Ausführung der Erfindung wird diese Luftkammer jedoch in einem Einlegeteil oder in einem von außen mit der Filterpatrone verbindbaren Zusatzteil angeordnet, das das elektronische Kommunikationselement mit Antenne und Mikrochip beinhaltet, wobei das Einlegeteil ein wasserdichtes Einlegegehäuse oder das Zusatzteil ein Zusatzgehäuse mit einem innenliegenden Luftraum umfasst. Die Antenne wird bevorzugt derart in die Luftkammer eingesetzt, dass die Antenne wenigstens teilweise von der Wandung der Luftkammer, insbesondere des Einlegegehäuses oder des Zusatzgehäuses, beabstandet mit Luftkontakt in dem Luftraum liegt.

Es hat sich gezeigt, dass durch das Vorsehen des Luftraums sowie den Luftkontakt der Antenne Frequenzverstimmungen beim Eintritt in das Wasser soweit reduzierbar sind, dass die vorgesehene Kommunikation auch ohne Kompensationsmaßnahme gemäß dem Stand der Technik möglich sind.

Zur Realisierung eines solchen Einlegegehäuses oder eines solchen Zusatzgehäuses hat es sich bewährt, dieses aus wenigstens zwei, wasserdicht miteinander verbundenen Teilen aufzubauen.

Hierdurch ist eine Fertigung der Einzelteile mit definiertem Innenraum der Luftkammer, insbesondere des Einlegegehäuses oder des Zusatzgehäuses sowie eine einfache Montage der Antenne nebst Mikrochip möglich.

Die wasserdichte Verbindung ist hierbei auf einfache Weise durch Verschweißen, Vergießen oder Verkleben mit wenig Aufwand möglich. Als Material für die Wandung der Luftkammer, insbesondere des Einlegegehäuses oder des Zusatzgehäuses wird vorzugsweise ein Kunststoff gewählt, durch den die elektromagnetischen Wellen, die für die Kommunikation vorgesehen sind, ohne Weiteres transmittieren können.

Bevorzugt wird die Antenne aus einer Antennenspule gebildet, die aus Draht gewickelt wird. Eine solche Ausführungsform ermöglicht eine Antennenausführung mit guter Reichweite bei großem Durchmesser und geringem Platzbedarf. Vorteilhafterweise wird eine solche Antenne aus einem einzigen Draht gewickelt, wodurch sich eine einfache Fertigung ergibt.

Darüber hinaus kann der Mikrochip direkt mit einem solchen Antennendraht an dessen Enden verbunden, insbesondere verschweißt oder verlötet werden.

In einer besonderen Ausführungsform der Erfindung wird die Luftkammer, insbsondere in Verbindung in der Ausführung eines Einlegegehäuses oder Zusatzgehäuses ringförmig aufgebaut, sodass ein Durchlass in der Mitte offen bleibt. Durch diesen Durchlass kann der Abfluss des Filters geführt werden. Die Abflussleitung wird dabei durch die Luftkammer bzw. das Einlegeteil oder Zusatzteil und das Kommunikationselement umschlossen. Die Antennenspule umgibt in diesem Fall durch die Anordnung in der Luftkammer, z.B.im Einlegegehäuse oder im Zusatzgehäuse ebenfalls die Abschlussleitung.

Erfindungsgemäß muss in der Luftkammer, z.B. im Einlegegehäuse oder im Zusatzgehäuse ein Luftraum vorhanden sein, in dem die Antenne wenigstens teilweise vom Gehäuse beabstandet mit Luftkontakt liegt. In einer bevorzugten Ausführungsform der Erfindung ist die Antennenspule derart angeordnet, dass sie auf der Innenseite, das heißt auf Seiten ihres Innendurchmessers frei mit Luftkontakt im Luftraum liegt und an der umfangsseitigen Außenseite der Luftkammer an deren Wandung anliegt. Durch die anliegende Position an der umfangsseitigen Außenseite wird somit die Position der Antennenspule in der Luftkammer bestimmt, während durch den Luftkontakt an der Innenseite der Spule der erfindungsgemäße Luftraum genutzt wird.

Zusätzlich oder alternativ kann der Luftkontakt der Antennenspule auch auf wenigstens einer Stirnseite vorgesehen werden, die wenigstens teilweise frei im Luftraum mit Luftkontakt liegt.

Vorteilhafterweise wird in der Ausführung eines Einlegeteils zwischen dem Außenumfang des Einlegegehäuses und der Gehäusewand des Filtergehäuses ein Durchlass für einen Wasserdurchfluss vorgesehen. Dies ermöglicht eine weitgehende Beibehaltung bekannter Bauweisen, bei denen in einer Filterpatrone durch permanent offene Eintrittsöffnungen Wasser aus einem Wasservorratstank eintritt und im Anschluss daran nach oben in Richtung zu einem Filterbett geführt wird. Bei der beschriebenen Anordnung kann das Wasser außen an dem Kommunikationselement bzw. dem Einlegegehäuse vorbei geführt werden.

Denkbar sind jedoch auch Ausführungsformen, bei dem eine Leitungsführung durch den inneren Durchlass eines ringförmigen Einlegegehäuses vorgesehen ist, die dementsprechend gegenläufig zu der ebenfalls durch diese Öffnung geführte Abflussleitung führt.

Vorteilhafterweise wird das Kommunikationselement in Strömungsrichtung hinter einer Wassereinlassöffnung des Filtergehäuses angeordnet, wodurch sich eine Anordnung im Inneren des Filtergehäuses ergibt, sodass das Kommunikationselement von äußeren Einflüssen unbeeinträchtigt ist.

Bevorzugt werden weiterhin Fixierelemente, insbesondere Rastelemente zur Fixierung, insbesondere zur Verrastung des Kommunikationselementes bzw. des Einlegegehäuses im Filtergehäuse vorgesehen. Auf diese Weise ist bei weiterhin einfacher Montage eine zuverlässige Fixierung in einer definierten Position im Inneren des Filtergehäuses möglich.

Mit dem erfindungsgemäßen Kommunikationselement können patronenspezifische Informationen durch ein geräteseitiges, korrespondierendes Kommunikationselement, im Folgenden auch externes Kommunikationselement genannt, ausgelesen und/oder übermittelt werden.

Unter einem Kommunikationselement gemäß dieser Patentanmeldung ist dabei jedes Element zu verstehen, mittels dem eine Information von der Filterpatrone für ein externes Kommunikationselement lesbar oder übertragbar ist.

Auf diese Weise ist eine Kontrolle möglich, inwieweit die Filterpatrone zur gewünschten Verwendung in der Lage oder geeignet ist.

Durch die erfindungsgemäße Antenne kann ein elektromagnetisches Signal zwischen dem Kommunikationselement des Filters sowie dem externen Kommunikationselement übertragen werden. Die Informationsübertragung erfolgt hierbei drahtlos. Vorteilhafterweise wird das Kommunikationselement der Filterpatrone hierbei so ausgestaltet, dass zusätzlich eine drahtlose Energieversorgung stattfindet. Eine solche Energieübertragung kann beispielsweise durch Induktion über eine externe Spule, zum Beispiel über das externe Kommunikationselement erfolgen, sodass kein Energiespeicher oder allenfalls ein Kondensator im Kommunikationselement des Filters erforderlich ist. Derartige Kommunikationselemente sind unter dem Begriff "RFID-Transponder" bekannt.

Derartige Kommunikationselemente sind in der Regel zusätzlich mit einem Speicher in dem mikroelektronischen Chip versehen, um gewünschte Daten vorab oder während der Kommunikation zu speichern. Auf diese Weise ist ein "intelligenter" Datenaustausch möglich. Neben ausschließlich filterspezifischen Daten, wie Seriennummern oder dergleichen, können beispielsweise auch Steuersignale für das Haushaltsgerät, zu dem das externe Kommunikationselement gehört, abhängig vom Filterzustand übermittelt werden.

So kann beispielsweise der Verbrauch an Filterkapazität, die Wasserhärte oder die Laufzeit eines Filters überwacht werden, da das Haushaltsgerät die entsprechenden Daten des Filters durch dessen Kommunikationselement erhalten kann. Auch Steuerungsvorgänge können mit Hilfe der erfindungsgemäßen Kommunikation erfolgen. Hierdurch ist eine optimale Nutzung des Filters sowie ein Schutz von Anwendern und der entsprechenden Geräte vor fehlerhaften Betrieb möglich.

Auch eine Authentifizierung eines Filters ist es weiterhin möglich, die Haushaltsgeräte vor Filter minderer Qualität zu schützen. Zudem ist auch das Anwenderverhalten mit Hilfe einer entsprechenden Auswertetechnik erfassbar.

Ein Ausführungsbeispiel der Erfindung ist in der Zeichnung dargestellt und wird anhand der Figuren näher erläutert.

Im Einzelnen zeigen:
- Figur 1: eine schematische Schnittdarstellung eines Ausschnitts bestehend aus maschinenseitigem Tanksockel mit eingesetztem Wassertank,
- Figur 2: eine perspektivische Darstellung eines Tanksockels gemäß Figur 1 mit erfindungsgemäßem Kommunikationselement,
- Figur 3: eine schematische Schnittdarstellung einer Filterpatrone für einen Wasservorratstank gemäß den Figuren 1 und 2,
- Figur 4: eine Ausschnittvergrößerung des unteren Teils einer Filterpatrone gemäß Figur 3,
- Figur 5: eine perspektivische Darstellung mit Blick in den unteren Bereich einer aufgeschnittenen Filterpatrone gemäß Figur 3 und
- Figur 6: eine perspektivische Darstellung der Einzelbestandteile des Kommunikationselementes einer Filterpatrone gemäß Figur 5.

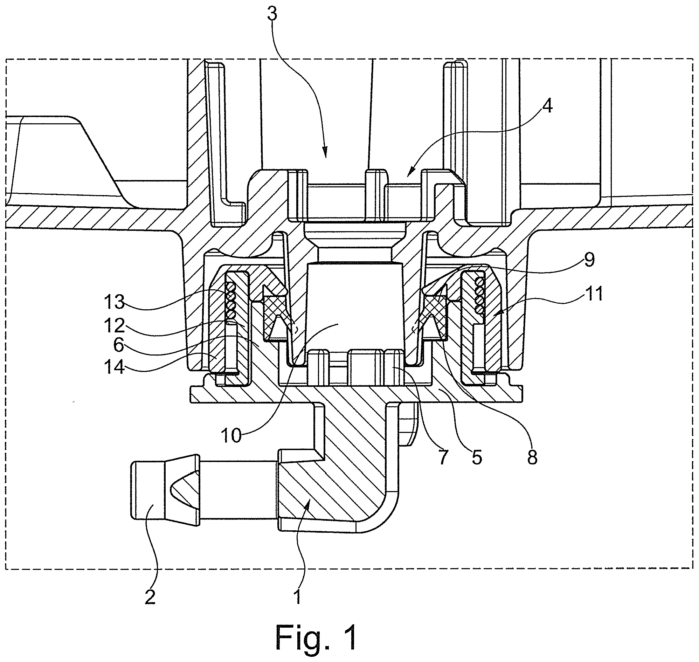

In Figur 1 ist ein Tanksockel 1 erkennbar, wie er in einer Getränkemaschine, wie einer Espressomaschine, einem Kaffeevollautomat oder dergleichen, verwendet wird. Der Tanksockel 1 kann Teil eines Gehäuses oder auf andere Art mit einer entsprechenden Getränkemaschine verbunden sein.

Eine Anschlusstülle 2 dient dem Wasserzufluss zur Getränkemaschine.

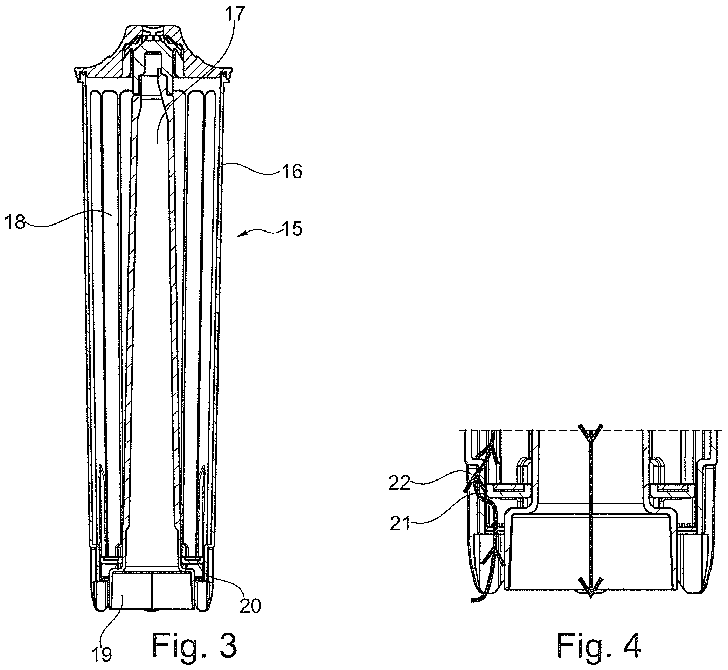

Ein Wasservorratstank 3 ist auf den Tanksockel 1 aufgesetzt. Im Inneren verfügt der Wasservorratstank 3 über eine Aufnahme 4 zur Aufnahme eines Wasserfilters, beispielsweise einer Filterpatrone gemäß Figur 3.

Der Tanksockel 1 umfasst einen Boden 5, der im Bereich der Wasserführung natürlich geschlossen ist, außerhalb der Wasserführung jedoch nicht durchgehend geschlossen sein muss.

Von dem Boden 5 erstreckt sich ein Sockelstutzen 6 mit einer Abstufung 8, in die eine Ringdichtung 9 eingesetzt ist. Die Ringdichtung 9 dichtet einen Tankstutzen 10 gegenüber dem Sockelstutzen 6 ab und stellt somit einen abgedichteten Wasserzufluss zur Getränkemaschine aus dem Wasservorratstank bei eingesetztem Wasservorratstank sicher.

Vertikalrippen 7 dienen zum Aufdrücken eines nicht näher dargestellten Ventils im Tankstutzen 10, sobald dieser auf den Tanksockel aufgesetzt wird.

Ein Kommunikationselement 11 umgibt den Sockelstutzen 6. Das Kommunikationselement 11 umfasst einen ringförmigen Spulenkörper 12, auf dem eine Antennenspule 13 aufgewickelt ist. Die Antennenspule sowie der Spulenkörper 12, 13 sind mit einer Abdeckkappe 14 abgedeckt, wobei die Abdeckkappe 14 ebenfalls über die Ringdichtung 9 gegenüber dem Sockelstutzen 6 abgedichtet ist. Die Antennenspule 13 ist somit vor äußeren Störeinflüssen wie Verschmutzung oder Wassereintritt geschützt.

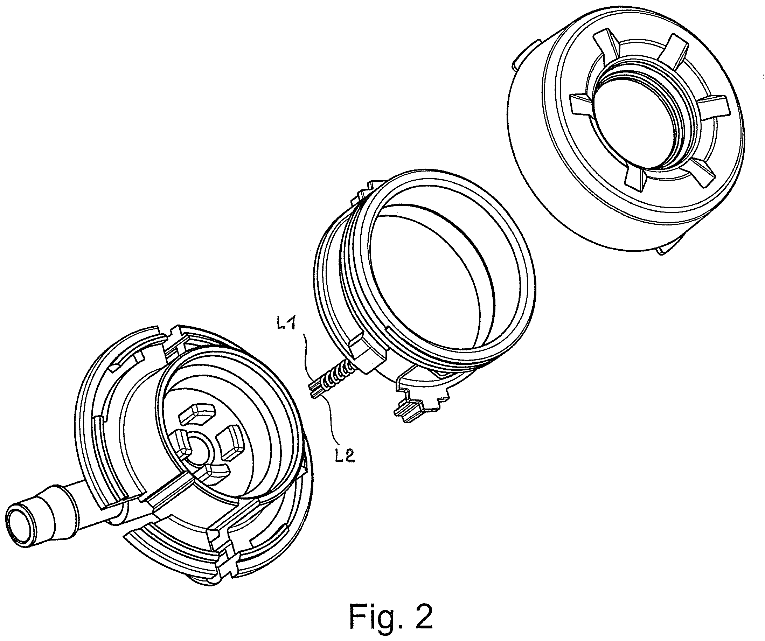

Die beschriebenen Elemente sind in der vergrößerten perspektivischen und auseinandergezogenen Darstellung gemäß Figur 2 näher erkennbar.

In Figur 2 sind zusätzlich die Anschlussleitungen L1, L2 erkennbar, die für den elektrischen Anschluss der Antennenspule 13 an die Getränkemaschine sorgen.

Über die Steuerung der Getränkemaschine kann die Antennenspule 13 sowohl zur Energieübertragung als auch zur Datenübertragung mit Strom bzw. mit Spannungsimpulsen beaufschlagt werden.

Die Energieübertragung dient hierbei zur Energieversorgung eines filterseitigen Kommunikationselementes, mittels dem auch entsprechende Informationen über die drahtlose Datenverbindung an die Getränkemaschine übermittelt und/oder von dieser empfangen werden.

Figur 3 zeigt einen Schnitt durch eine solche Filterpatrone 15 mit einem Filtergehäuse 16 sowie einer Fallleitung 17. Außerhalb der Fallleitung 17 befindet sich eine Filterkammer 18 mit nicht näher dargestelltem Filtermaterial. Die Filterpatrone 15 arbeitet hinsichtlich der Wasseraufbereitung auf bekannte Art und Weise.

Abweichend von bekannten Filterpatronen ist nunmehr im Bereich des Anschlusses 19, mit dem die Filterpatrone an den Tankboden des Wasservorratstanks 3 angeschlossen wird, ein Kommunikationselement 20 vorgesehen. Das Kommunikationselement 20 ist ringförmig aufgebaut und umschließt die Fallleitung 17 und damit den Wasserabfluss in Richtung des Tankstutzens 10 und somit in Richtung der Getränkemaschine.

In der vergrößerten Darstellung gemäß Figur 4 ist erkennbar, dass das Kommunikationselement 20 an seinem Außenumfang 21 von der Gehäusewand 22 des Filtergehäuses 16 so weit beabstandet ist, dass ein Wasserdurchfluss in Richtung Filterkammer 18 an der Außenseite des Kommunikationselementes möglich ist. Der Wasserfluss ist durch Pfeildarstellung veranschaulicht. Die Filterkammer 18 wird in dieser Ausführungsform im Aufstrom durchströmt. Das aufbereitete Wasser gelangt über die Fallleitung 17 zum Anschluss 19 in den Tankstutzen 10.

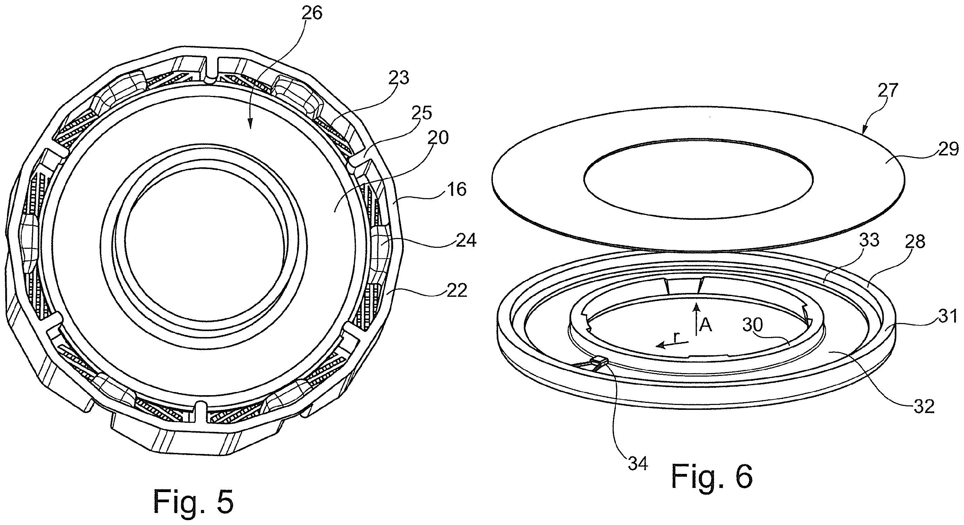

Wie in Figur 5 erkennbar, liegt das Kommunikationselement 20 in Strömungsrichtung oberhalb von Sieböffnungen 23. Es wird über Abstandshalter 24 in Position bezüglich der Gehäusewand 22 des Filtergehäuses 16 gehalten und über Rastelemente 25 auch in axialer Richtung fixiert.

Das Kommunikationselement 20 ist somit als Einlegeteil 26 ausgebildet und umfasst ein zweiteiliges Einlegegehäuse 27. Das Einlegegehäuse 27 wiederum umfasst eine ringförmige Gehäuseschale 28 sowie einen Deckel 29. Das Einlegegehäuse 27 umfasst eine innere Umfangswand 30 sowie eine äußere Umfangswand 31, die sich beide von einem Gehäuseboden 31 aus in axialer Richtung erstrecken.

In die Gehäuseschale 28 ist eine aus einem Draht gewickelte Antennenspule 33 eingelegt. An die Antennenspule 33 ist ein Mikrochip 34 angeschlossen. Die Antennenspule 33 ist aus einem einzigen Draht gewickelt, wobei der Mikrochip 34 mit den Drahtenden verbunden, z.B. auf die beiden Drahtenden aufgesteckt und fest und dauerhaft mit diesen verbunden, beispielsweise verklebt, verschweißt oder vergossen ist.

Wie in der Darstellung gemäß Figur 6 erkennbar, befindet sich in axialer Richtung A oberhalb sowie in radialer Richtung r innerhalb der Antennenspule 33 ein Luftraum, in dem die Antennenspule 33 in direktem Luftkontakt steht. Außen fixiert die äußere Umfangswand 31 die Antennenspule 33. Stirnseitig wird die Antennenspule 33 am Gehäuseboden 32 aufgesetzt und kann dort mit diesem verbunden werden, beispielsweise verrastet, verklebt oder auch nur verklemmt werden.

Der Mikrochip 34 stützt sich an der inneren Umfangswand 30 ab, wodurch seine Position und damit auch die zuverlässige Kontaktierung zusätzlich gesichert ist.

Der Deckel 29, der bei entsprechend geringer Materialstärke auch als Deckelfolie ausgestaltet sein kann, wird auf die Gehäuseschale 28 aufgelegt und wasserdicht mit dieser verbunden, beispielsweise verschweißt oder verklebt.

Die Antennenspule 33 bildet zusammen mit dem Mikrochip 34 ein so genanntes RFID-Element, in dem Informationen abspeicherbar und abrufbar sind. Ein solches Element benötigt keine eigene Energieversorgung, da elektromagnetisch eingestrahlte Energie über die Antennenspule 33 nutzbar ist, um den Mikrochip 34 zu betreiben.

Diese Energie wird beispielsweise über die Antennenspule 13 der Getränkemaschine eingestrahlt. Auch der Datenfluss wird vorzugsweise über die gleichen Antennenspulen 13 und 33 bewerkstelligt.

Durch die dargestellte Bauform und Anordnung der Antennenspulen 13 und 33 ist für beide Antennen ein vergleichsweise großer Querschnitt möglich. Zugleich ist eine in axialer Richtung sehr nah beieinander liegende Einbaulage realisierbar, wodurch eine sichere Datenübertragung bei vertretbarer Energiestrahlung ermöglicht wird.

Gemäß der Erfindung ist es möglich, Filterdaten abrufbar in dem entsprechenden Filter vorzusehen, und gegebenenfalls die Getränkemaschine entsprechend zu steuern. Bei entsprechender Ausgestaltung ist es jedoch auch möglich, zusätzliche Daten von der Getränkemaschine in den Datenspeicher des Mikrochips 34 zu schreiben, beispielsweise die Betriebsdauer des Filters, sodass dieser selbst bei Entnahme und erneuter Verwendung die Daten über seinen Zustand, beispielsweise hinsichtlich seiner Erschöpfung, einer Getränkemaschine zur Verfügung stellen kann.

### Bezugszeichenliste:

- 1: Tanksockel
- 2: Anschlusshülle
- 3: Wassertank
- 4: Aufnahme
- 5: Boden
- 6: Sockelstutzen
- 7: Vertikalrippen
- 8: Abstufung
- 9: Ringdichtung
- 10: Tankstutzen
- 11: Kommunikationselement
- 12: Spulenkörper
- 13: Antennenspule
- 14: Abdeckkappe
- 15: Filterpatrone
- 16: Filtergehäuse
- 17: Fallleitung
- 18: Filterkammer
- 19: Anschluss
- 20: Kommunikationselement
- 21: Außenumfang
- 22: Gehäusewand
- 23: Sieböffnungen
- 24: Abstandshalter
- 25: Rastelemente
- 26: Einlegeteil
- 27: Einlegegehäuse
- 28: Gehäuseschale
- 29: Deckel
- 30: innere Umfangswand
- 31: äußere Umfangswand
- 32: Gehäuseboden
- 33: Antennenspule
- 34: Mikrochip

## Patentansprüche

1. Filter (15) zum Einsetzen in einen Wasservorratstank (3) einer Getränkemaschine, wie eine Espressomaschine, eines Kaffeevollautomaten oder dergleichen, mit einem Filtergehäuse (16), mit einem zum Wasservorratstank offenen Wassereinlass und einem mit einem Anschlusselement des Wasservorratstanks beim Einsetzen verbindbaren Wasserauslass, wobei im Filtergehäuse ein elektronisches Kommunikationselement (20) mit Antenne (33) und Mikrochip (34) angeordnet ist, **dadurch gekennzeichnet, dass** ein Luftraum vorgesehen ist, in den die Antenne (33) derart eingesetzt ist, dass die Antenne wenigstens teilweise mit Luftkontakt in dem Luftraum liegt.

2. Filter nach Anspruch 1, **dadurch gekennzeichnet, dass** eine Luftkammer im Filtergehäuse (16) angeordnet ist, in die die Antenne (33) derart eingesetzt ist, dass sie wenigstens teilweise von der Wandung der Luftkammer beabstandet mit Luftkontakt in dem Luftraum liegt.

3. Filter nach einem der vorgenannten Ansprüche, **dadurch gekennzeichnet, dass** die Antennenspule (33) wenigstens auf der Innenseite frei mit Luftkontakt im Luftraum liegt und an der umfangsseitigen Außenseite an der Wandung der Luftkammer anliegt.

4. Filter nach einem der vorgenannten Ansprüche, **dadurch gekennzeichnet, dass** die Antennenspule (33) auf wenigstens einer Stirnseite wenigstens teilweise frei im Luftraum mit Luftkontakt liegt.

5. Filter nach einem der vorgenannten Ansprüche, **dadurch gekennzeichnet, dass** die Luftkammer in einem in das Filtergehäuse eingelegten Einlegeteil (26) angeordnet ist.

6. Filter nach einem der vorgenannten Ansprüche, **dadurch gekennzeichnet, dass** das Einlegeteil (26) ein wasserdichtes Einlegegehäuse (27) mit einem innen liegenden Luftraum umfasst.

7. Filter nach einem der vorgenannte Ansprüche, **dadurch gekennzeichnet, dass** das Einlegegehäuse (27) aus wenigstens zwei, wasserdicht verbundenen Teilen aufgebaut ist.

8. Filter nach einem der vorgenannten Ansprüche, **dadurch gekennzeichnet, dass** eine aus einem einzigen durchgehenden Draht gewickelte Antennenspule (33) vorgesehen ist.

9. Filter nach einem der vorgenannten Ansprüche, **dadurch gekennzeichnet, dass** der Mikrochip (34) direkt mit dem Antennendraht verbunden, insbesondere verschweißt oder verlötet ist.

10. Filter nach einem der vorgenannten Ansprüche, **dadurch gekennzeichnet, dass** die Luftkammer und /oder das Einlegegehäuse (27) ringförmig ist.

11. Filter nach einem der vorgenannten Ansprüche, **dadurch gekennzeichnet, dass** zwischen dem Außenumfang des Einlegegehäuses (27) und der Gehäusewand des Filtergehäuses (16) ein Durchlass für einen Wasserfluss vorgesehen ist.

12. Filter nach einem der vorgenannten Ansprüche, **dadurch gekennzeichnet, dass** das Kommunikationselement (20) in Strömungsrichtung hinter einer Wassereinlassöffnung des Filtergehäuses (16) liegt.

13. Filter nach einem der vorgenannten Ansprüche, **dadurch gekennzeichnet, dass** Fixierelemente, insbesondere Rastelemente (25) zur Fixierung, insbesondere Verrastung des Kommunikationselementes (20) im Filtergehäuse (16) vorgesehen sind.

## Claims

1. A filter (15) for insertion into a water storage tank (3) of a beverage machine, such as an espresso machine, a fully automated coffee machine or the like, having a filter housing (16), with a water inlet open to the water storage tank and a water outlet that is connectable to a connection element of the water storage tank upon insertion, wherein an electronic communication element (20) with antenna (33) and microchip (34) is arranged in the filter housing, **characterized in that** an air space is provided, into which the antenna (33) is inserted such that the antenna is at least partially exposed to the air in the air space.

2. The filter according to claim 1, **characterized in that** an air chamber is arranged in the filter housing (16), into which the antenna (33) is inserted such that it is at least partially exposed to the air in the air space at a distance from the wall of the air chamber.

3. The filter according to one of the preceding claims, **characterized in that** the antenna coil (33) is at least freely exposed to the air in the air space on the inside and abuts the wall of the air chamber on the peripheral outer side.

4. The filter according to one of the preceding claims, **characterized in that** the antenna coil (33) is at least partially freely exposed to the air in the air space on at least one front side.

5. The filter according to one of the preceding claims, **characterized in that** the air chamber is arranged in an insert (26) that is inserted into the filter housing.

6. The filter according to one of the preceding claims, **characterized in that** the insert (26) comprises a watertight insert housing (27) having an internal air space.

7. The filter according to one of the preceding claims, **characterized in that** the insert housing (27) is constructed of at least two parts that are connected in a watertight manner.

8. The filter according to one of the preceding claims, **characterized in that** an antenna coil (33) is provided, wound from a single continuous wire.

9. The filter according to one of the preceding claims, **characterized in that** the microchip (34) is connected, particularly welded or soldered, directly to the antenna wire.

10. The filter according to one of the preceding claims, **characterized in that** the air chamber and/or the insert housing (27) is annular.

11. The filter according to one of the preceding claims, **characterized in that** a passage for a flow of water is provided between the outer periphery of the insert housing (27) and the housing wall of the filter housing (16).

12. The filter according to one of the preceding claims, **characterized in that** the communication element (20) is positioned downstream of a water inlet opening of the filter housing (16) in the direction of flow.

13. The filter according to one of the preceding claims, **characterized in that** fixing elements, in particular latching elements (25), are provided for fixing, in particular latching of the communication element (20) into the filter housing (16).

## Revendications

1. Filtre (15) destiné à être inséré dans un réservoir d'eau (3) d'une machine à boisson, telle qu'une machine à expresso, une machine à café automatique ou similaire, comprenant un boîtier de filtre (16), avec une entrée d'eau ouverte sur le réservoir d'eau et une sortie d'eau pouvant être raccordée à un élément de raccordement du réservoir d'eau au moment de l'insertion, un élément de communication électronique (20) doté d'une antenne (33) et d'une micro-puce (34) étant disposé dans le boîtier de filtre, **caractérisé en ce qu'**il est prévu un espace d'air dans lequel l'antenne (33) est insérée, de telle sorte que l'antenne soit au moins partiellement en contact avec l'air dans l'espace d'air.

2. Filtre selon la revendication 1, **caractérisé en ce qu'**il est prévu dans le boîtier de filtre (16) une chambre à air, dans laquelle l'antenne (33) est insérée de manière à être au moins partiellement espacée de la paroi de la chambre à air en contact avec l'air dans l'espace d'air.

3. Filtre selon l'une des revendications précédentes, **caractérisé en ce que** la bobine d'antenne (33) est disposée libre au moins sur le côté interne en contact avec l'air dans l'espace d'air et s'appuie contre le côté externe périphérique de la paroi de la chambre à air.

4. Filtre selon l'une des revendications précédentes, **caractérisé en ce que** la bobine d'antenne (33) repose sur au moins une face frontale au moins partiellement libre dans l'espace d'air en contact avec l'air.

5. Filtre selon l'une des revendications précédentes, **caractérisé en ce que** la chambre à air est disposée dans une partie d'insertion (26) introduite dans le boîtier de filtre.

6. Filtre selon l'une des revendications précédentes, **caractérisé en ce que** la partie d'insertion (26) comprend un boîtier d'insertion étanche à l'eau (27) doté d'un espace d'air situé à l'intérieur.

7. Filtre selon l'une des revendications précédentes, **caractérisé en ce que** le boîtier d'insertion (27) est constitué d'au moins deux parties raccordées de manière étanche à l'eau.

8. Filtre selon l'une des revendications précédentes, **caractérisé en ce qu'**il est prévu une bobine d'antenne (33) enroulée à partir d'un seul fil continu.

9. Filtre selon l'une des revendications précédentes, **caractérisé en ce que** la micro-puce (34) est connectée directement au fil d'antenne, en particulier soudée ou brasée.

10. Filtre selon l'une des revendications précédentes, **caractérisé en ce que** la chambre à air et/ou le logement d'insertion (27) sont annulaires.

11. Filtre selon l'une des revendications précédentes, **caractérisé en ce qu'**un passage est prévu entre la périphérie extérieure du logement d'insertion (27) et la paroi du boîtier de filtre (16) pour un écoulement d'eau.

12. Filtre selon l'une des revendications précédentes, **caractérisé en ce que** l'élément de communication (20) se trouve dans le sens de l'écoulement derrière une ouverture d'entrée d'eau du boîtier de filtre (16).

13. Filtre selon l'une des revendications précédentes, **caractérisé en ce qu'**il est prévu des éléments de fixation, en particulier des éléments d'encliquetage (25) pour la fixation, en particulier un encliquetage de l'élément de communication (20) dans le boîtier de filtre (16).
